# EUROPÄISCHE PATENTANMELDUNG

(11) **EP 2 395 350 A1**
(43) Veröffentlichungstag der Anmeldung: **14.12.2011**
(21) Anmeldenummer: 11178695.0
(22) Anmeldetag: 24.07.2006
(51) Int. Cl.: G01N 30/20, G01N 35/10

(54) **Mikrosystemtechnischer Injektor für einen Gaschromatographen**

(30) Priorität: 25.07.2005 DE 202005011825 U
(62) Teilanmeldung aus: 06762781.0
(71) Anmelder: SLS Micro Technology GmbH, 21079 Hamburg (DE)
(72) Erfinder: Lehmann, Uwe, 21079 Hamburg (DE)
(74) Vertreter: Eisenführ, Speiser & Partner

(57) **Zusammenfassung**

Die Erfindung betrifft einen mikrosystemtechnischen Injektor für einen Gaschromatographen, umfassend einen ersten und zweiten Fluidleitungsblock, einen Aktuator zum Bewegen des ersten und zweiten Fluidleitungsblocks zwischen einer ersten und einer zweiten Injektorstellung, eine Probeneinlassöffnung zum Zuführen eines gasförmigen Probenmaterials, eine erste Auslassöffnung zum Ableiten des Probenmaterials in der ersten Injektorstellung, eine Trägergaseinlassöffnung zum Zuführen eines Trägergases, eine zweite Auslassöffnung zum Ableiten des Trägergases in der ersten Injektorstellung in eine an die zweite Auslassöffnung anschließbare erste Trennsäule, wobei die Probeneinlassöffnung in der zweiten Injektorstellung mit einem ersten Probenspeicher verbunden ist, um diesem das gasförmige Probenmaterial zuzuführen. Erfindungsgemäß ist die fünfte Öffnung in der ersten Injektorstellung mit der Trägergaseinlassöffnung verbunden, und eine sechste Öffnung in der zweiten Injektorstellung mit der Trägergaseinlassöffnung verbunden, um Trägergas von der Trägergaseinlassöffnung zur sechsten Öffnung zu leiten und hierdurch in der zweiten Injektorstellung einen im Kreislauf an die zweite Auslassöffnung und die sechste Öffnung angeschlossene erste Trennsäule rückwärts zu durchströmen, und in der zweiten Injektorstellung ist die fünfte Öffnung mit der zweiten Auslassöffnung verbunden, sodass in der zweiten Injektorstellung ein durch die zweite Auslassöffnung zugeführtes Gas der fünften Öffnung zugeführt wird und einer mit der fünften Öffnung verbundenen zweiten Trennsäule zugeführt werden kann.

## Beschreibung

Die Erfindung betrifft einen mikrosystemtechnischen Injektor nach dem Oberbegriff von Anspruch 1. Ein weiterer Aspekt der Erfindung ist ein Gaschromatograph mit einer Trennsäule und einem Detektor und einem solchen Injektor.

Ein solcher Injektor ist beispielsweise in DE 103 01 601 B3 beschrieben. Bei diesen Injektoren in Mikrosystemtechnik handelt es sich um miniaturisierte mikromechanische Bauteile, die beispielsweise mittels nasschemischer Ätzung, photolitographischer Maskierung und Plasmaätzung oder ähnlichen, aus der Halbleitertechnik bekannten Verfahren hergestellt werden. Bei der Anwendung in miniaturisierten Gaschromatographen weisen diese mikrosystemtechnischen Bauteile einerseits den Vorteil auf, dass die gesamte Analyseapparatur wesentlich verkleinert werden kann und andererseits die Gesamtvolumina der Leitungen, Verzweigungen um Größenordnungen verringert werden können, wodurch die Analyse sehr kleiner Probenmengen mit hoher Genauigkeit möglich wird.

Diese miniaturisierten Injektoren können mit konventionellen Trennsäulen kombiniert werden. Vorzugsweise werden sie jedoch mit einer ebenfalls miniaturisierten Trennsäule kombiniert, wie beispielsweise beschrieben in DE 197 26 000 C2 oder DE 203 01 231 U1 und DE 297 247 21 U1. Diese Trennsäulen können in Spiralenform oder meanderförmig bereitgestellt werden und werden ebenfalls vorzugsweise in Silizium-Glas-Technologie hergestellt, wobei in eines der Substrate ein Graben eingearbeitet wird, der mit einer stationären Phase beschichtet wird.

Aus DE 199 06 100 C2 ist schließlich ein thermischer Durchflusssensor bekannt, der ebenfalls in Mikrosystemtechnik hergestellt ist. Ein miniaturisierter Gaschromatograph, welcher einen Injektor der vorgenannten Art aufweist, ist aus DE 103 01 601 B3 bekannt.

Diese bekannten Injektoren, Gaschromatographen und miniaturisierten Bauteile für solche Gaschromatographen erlauben zwar bei vielen analytischen Aufgaben eine ausreichend schnelle und präzise Bestimmung der Bestandteile eines unbekannten, zu analysierenden Stoffes und erlauben zudem oftmals auch einen mobilen Einsatz eines Gaschromatographen. Jedoch sind die bekannten mikrosystemtechnischen Injektoren und Gaschromatographen noch weiter verbesserbar, um deren Einsatzmöglichkeiten zu erweitern. So ist es beispielsweise wünschenswert, die Anzahl der zu analysierenden Stoffteile und die Auflösung der Analyse zu erhöhen. Zudem ist es oftmals wünschenswert, den für eine Messung erforderlichen Zeitraum zu verkürzen oder in einem vorgegebenen Zeitraum eine größere Anzahl von Messungen durchzuführen.

Ziel der Erfindung ist es, einen Injektor und einen Gaschromatographen bereitzustellen, der eine solche verbesserte Anwendung auf mikrosystemtechnischer Basis ermöglicht.

Diese Aufgabe wird durch einen Injektor nach Anspruch 1 gelöst.

Der bekannte mikrosystemtechnische Injektor weist einen ersten Fluidleitungsblock auf, in dem Öffnungen zum Einlassen und Auslassen des zu analysierenden Stoffes sowie zum Ein- und Auslassen eines Trägergases vorhanden sind. Dieser erste Fluidleitungsblock weist eine entsprechende Leitungsführung auf, die in Zusammenarbeit mit einem zweiten Fluidleitungsblock, der auf dem ersten Fluidleitungsblock beweglich angeordnet ist und der entsprechende Grabenvertiefungen aufweist, zwei definierte lnjektorstellungen erzielt. In der ersten Stellung wird der Injektor von dem zu analysierenden Stoff (der "Probe") und dem Trägergas (üblicherweise Helium) durchströmt, wobei das Trägergas eine Speicherschleife im Injektor durchspült.

Durch Verschieben des ersten und zweiten Fluidleitungsblocks zueinander wird der Strömungsverlauf von Probe und Trägergas dahingehend verändert, dass zwar Probe und Trägergas bei den gleichen Öffnungen in den Injektor eintreten bzw. aus diesen heraustreten, jedoch durchströmt nun die Probe die Speicherschleife und die Speicherschleife wird hierdurch mit dem Probenmaterial befüllt. Schaltet man nun in die erste Injektorstellung zurück, so spült das Trägergas eine definierte Menge des Probenmaterials aus der Speicherschleife heraus und diese wird einer Trennsäule zugeführt, in der eine gaschromatographische Trennung und nachfolgende Analyse mit einem Detektor erfolgen kann.

Die Erfindung bildet den bekannten Injektor fort, indem durch Bereitstellung einer fünften Öffnung die Variabilität des Injektors erhöht wird und dadurch verschiedene vorteilhafte Führungen von Probenmaterial und Trägergas ermöglicht werden.

Bei einer ersten vorteilhaften Ausbildungsform ist der erfindungsgemäße Injektor für eine Doppelanalyse ausgeführt, indem die fünfte Öffnung in der ersten Injektorstellung mit einem zweiten Probenspeicher verbunden ist, um diesem ein gasförmiges Probenmaterial zuzuführen, und der zweite Probenspeicher in der zweiten Injektorstellung mit der zweiten Auslassöffnung verbunden ist, sodass das im zweiten Probenspeicher gespeicherte Probenmaterial in der zweiten Injektorstellung durch Spülung des zweiten Probenspeichers mit Trägergas der zweiten Auslassöffnung zugeführt wird.

Diese Fortbildung des erfindungemäßen Injektors ermöglicht es, dass in kurzer Folge nacheinander zwei Probenmengen auf eine mit dem Injektor verbundene Trennsäule aufgegeben werden. Zu diesem Zweck wird in der ersten Injektorstellung der zweite Probenspeicher mit Probenmaterial gefüllt und der erste Probenspeicher mit Trägergas beaufschlagt, um das darin befindliche Probenmaterial in die Trennsäule zu spülen. In der zweiten Injektorstellung wird dann der erste Probenspeicher mit einer Probe befüllt und der zweite Probenspeicher mit Trägergas durchspült, um das darin befindliche zweite Probenmaterial in die Trennsäule zu spülen. Bei dieser Ausführungsform können entweder zwei unterschiedliche Proben nacheinander in schneller Folge analysiert werden, um hierdurch eine insgesamt hohe Messgeschwindigkeit zu erzielen. In anderen Anwendungsfällen kann dieselbe Probe zweimal gemessen werden, um die Genauigkeit der Messung durch Mittelung über zwei oder mehr Messungen zu erhöhen. In anderen Fällen ist es vorteilhaft, wenn als zweite Probe Referenzgas zugeführt wird und somit eine Referenzmessung durchgeführt wird, um hierdurch die Genauigkeit der Analyse der ersten Probe zu erhöhen.

Dabei ist es insbesondere bevorzugt, wenn dieser Injektor für eine Doppelanalyse durch eine sechste Öffnung fortgebildet wird, die zum Abführen des durch die fünfte Öffnung zugeführten Probenmaterials ausgebildet ist. Grundsätzlich kann das durch die fünfte Öffnung zugeführte Probenmaterial in verschiedene Weise aus dem Injektor abgeführt werden, beispielsweise durch diejenige Öffnung, durch welche auch das Probenmaterial abgeführt wird, das durch die Probeneinlassöffnung zugeführt wird. Für eine saubere Prozessführung und eine chemisch saubere Analyse ist es jedoch vorteilhaft, eine separate Öffnung zum Abführen des Probenmaterials der fünften Öffnung vorzusehen.

Bei einer weiteren Fortbildung des erfindungsgemäßen Injektors ist dieser für eine sogenannte "Back-Flush-Schaltung" ausgebildet.

Dies wird erreicht, indem die fünfte Öffnung in der ersten Injektorstellung mit der Trägergaseinlassöffnung verbunden ist, eine sechste Öffnung in der zweiten Injektorstellung mit der Trägergaseinlassöffnung verbunden ist, um Trägergas von der Trägergaseinlassöffnung zur sechsten Öffnung zu leiten und hierdurch in der zweiten Injektorstellung eine im Kreislauf an die zweite Auslassöffnung und die sechste Öffnung angeschlossene erste Trennsäule rückwärts zu durchströmen, und in der zweiten Injektorstellung die fünfte Öffnung mit der zweiten Auslassöffnung verbunden ist, sodass in der zweiten Injektorstellung ein durch die zweite Auslassöffnung zugeführtes Gas der fünften Öffnung zugeführt wird und einer mit der fünften Öffnung verbundenen zweiten Trennsäule zugeführt werden kann.

Durch diese Fortbildung des Injektors wird erreicht, dass der Injektor ein aus dem Probenspeicher herausgespültes Probenmaterials zunächst auf eine erste Trennsäule gibt, die beispielsweise eine gepackte Trennsäule sein kann und die eine Trennung bestimmter leichtflüchtiger Stoffbestandteile leisten kann. Ist diese Trennung soweit erfolgt, ermöglicht es die zuvor beschriebene Injektorfortbildung, dass ein Rückwärtsbetrieb in der zweiten Injektorstellung durchgeführt wird und hierdurch das zu analysierende Probenmaterial, insbesondere diejenigen schwerflüchtigen Bestandteile, welche noch nicht vollständig durch die erste Trennsäule hindurchgetreten sind, aus dieser herausgespült werden und durch den Injektor einer zweiten Trennsäule zugeführt werden. Diese zweite Trennsäule kann die Trennung anderer Stoffbestandteile leisten und erhöht dadurch das Analysespektrum des Gaschromatographen mit diesem fortgebildeten Injektor. Als zweite Trennsäule eignet sich beispielsweise eine Dünnschichtrennsäule.

Gemäß einer weiteren vorteilhaften Fortbildungsform wird der erfindungsgemäße Injektor für einen sogenannten Umschaltungsbetrieb fortgebildet, indem die fünfte Öffnung in der ersten Injektorstellung mit einer sechsten Öffnung verbunden ist, durch welche das aus einer an die sechste Öffnung anschließbaren ersten Trennsäule strömende Gas dem Injektor zugeführt wird, die fünfte Öffnung in der zweiten Injektorstellung mit einer Zuführöffnung für Trägergas verbunden ist, um Trägergas zur fünften Öffnung zu leiten und dieses Trägergas hierdurch in der zweiten Injektorstellung zu einer an die fünfte Auslassöffnung anschließbaren zweiten Trennsäule zu leiten.

Bei dieser Ausführungsform wird ermöglicht, dass das zu analysierende Probenmaterial zunächst auf eine erste Trennsäule aufgegeben wird und nach Durchströmung dieser Trennsäule in einer zweiten Injektorstellung auf eine zweite Trennsäule aufgegeben wird. Diese Ausführungsform ist insbesondere vorteilhaft, wenn aus der ersten Trennsäule nicht voneinander getrennte Stoffbestandteile als Block heraustreten und diese dann in einer zweiten Trennsäule nachfolgend analysiert werden, um eine Trennung auch dieser Stoffbestandteile durch die zweite Trennsäule zu leisten. Wiederum kann durch diese Fortbildung das Analysespektrum durch den erfindungsgemäßen Injektor erhöht werden. So kann bei dieser Umschaltungstechnik des Injektors zunächst eine Dünnschichttrennsäule beaufschlagt werden, die nur schwerflüchtige Stoffe trennen kann, hingegen leichtflüchtige Stoffbestandteile als Block durchlässt und nachfolgend dieser Block der leichtflüchtigen Bestandteile durch Umschaltung in die zweite Injektorstellung auf eine gepackte Trennsäule aufgegeben werden, um dann diese schwerflüchtigen Bestandteile zu trennen.

Dabei kann die vorgenannte Ausbildungsform fortgebildet werden, indem in der zweiten Injektorstellung die fünfte Öffnung mit einer siebten Öffnung zum Zuführen von Trägergas verbunden ist und/oder die sechste Öffnung mit einer achten Öffnung zum Abführen von Gas, welches eine an die sechste Öffnung anschließbare erste Trennsäule durchströmt hat, verbunden ist. Durch die siebte und/oder achte Öffnung wird eine noch größere Variabilität und Genauigkeit erzielt, indem beispielsweise unterschiedliche Trägergase verwendet werden können und indem eine separate Abführung des Gases aus der ersten Trennsäule erfolgen kann.

Die erfindungsgemäßen mikrosystemtechnischen Injektoren können fortgebildet werden, indem der erste Fluidleitungsblock in Silizium/Glas-technik hergestellt ist und alle Öffnungen am ersten Fluidleitungsblock angeordnet sind. Diese Ausführungsform hat sich als fertigungstechnisch vorteilhaft und darüber hinaus als besonders unempfindlich gegenüber Verunreinigung erwiesen.

Weiterhin ist es vorteilhaft, wenn der zweite Fluidleitungsblock aus einem reibungsarmen und chemisch inerten Material, vorzugsweise mit geringen Ad- und Absorptionseigenschaften ausgebildet ist, insbesondere aus Polytetrafluorethylen (PTFE). Hierdurch wird ein vorteilhaftes Reibverhältnis zwischen erstem und zweitem Fluidleitungsblock erzielt und zudem verhindert, dass relevante Mengen des Probenmaterials adsorbiert oder absorbiert werden. Als Material für den zweiten Fluidleitungsblock haben sich in erster Linie Kunststoffe bewährt, in vielen Fällen ist jedoch auch die Ausbildung des zweiten Fluidleitungsblock aus Silizium oder Glas bevorzugt.

Der Injektor kann weiter fortgebildet werden, indem in der zum ersten Fluidleitungsblock weisenden Fläche des zweiten Fluidleitungsblocks Grabenabschnitte ausgebildet sind, welche in der ersten und zweiten Injektorstellung mit korrespondierenden Öffnungen in der zum zweiten Fluidleitungsblock weisenden Fläche des ersten Fluidleitungsblocks zusammenwirken, um die Verbindungen gemäß den vorgenannten Ausführungsformen zu schalten. Diese Grabenabschnitte können beispielsweise als Nuten definierter Länge oder ovale Vertiefungen im zweiten Fluidleitungsblock ausgebildet sein.

Es ist weiterhin bevorzugt, dass der zweite Fluidleitungsblock mit dem Aktuator verbunden ist.

Der Aktuator kann vorzugsweise elektromechanisch oder piezoelektrisch betätigt sein, was einen sicheren Betrieb des Aktuators ermöglicht.

Bevorzugt ist eine Heizungsvorrichtung zur Beheizung des ersten und/oder zweiten Fluidleitungsblocks vorhanden. Hierdurch wird verhindert, dass Bestandteile des Probenmaterials am ersten und/oder zweiten Fluidleitungsblock kondensieren und hierdurch die Analysenmenge reduziert und die Analyse verfälscht wird.

Ein weiterer Aspekt der Erfindung ist ein Gaschromatograph mit zumindest einer Trennsäule zum Auftrennen von Probenmaterial in seine atomaren und/oder molekülen Bestandteile und einem Detektor zum Erfassen dieser Bestandteile, der fortgebildet ist durch einen Injektor der zuvor beschriebenen Art.

Dieser Gaschromatograph ermöglicht eine wesentlich variablere Analysetechnik und kann dadurch sowohl schneller als auch präziser gaschromatographische Messungen durchführen.

Der erfindungsgemäße Gaschromatograph kann zur zeitversetzten Doppelanalyse mit einem Injektor der zuvor beschriebenen Art für eine Doppelanalyse fortgebildet werden, indem der Eingang der Trennsäule mit der zweiten Auslassöffnung in Fluidverbindung ist und der Ausgang dieser Trennsäule mit einem Detektor in Fluidverbindung ist. Hierduch wird, wie zuvor beschrieben die schnelle aufeinanderfolgende Analyse zweier unterschiedlicher oder gleichartiger Proben oder einer Probe und eines Referenzgases ermöglicht.

Dabei kann der erfindungsgemäße Gaschromatograph fortgebildet werden, indem die Trennsäule eine Dünnschichtsäule oder eine gepackte Säule ist. Diese Säulenarten eignen sich insbesondere gut für die Analyse und können darüber hinaus in vorteilhafter Weise in mikrosystemtechnischer Bauweise hergestellt werden.

Bei einer weiteren vorteilhaften Fortbildungsform ist der Gaschromatograph für eine Back-Flush-Analyse mit einem Injektor der vorgenannten Art für die Back-Flush-Analyse fortgebildet, mit einer ersten Trennsäule, deren Eingang mit der zweiten Auslassöffnung in Fluidverbindung ist und deren Ausgang mit einem Detektor in Fluidverbindung ist, der mit der sechsten Öffnung in Fluidverbindung ist, und mit einer zweiten Trennsäule, deren Eingang mit der fünften Öffnung in Fluidverbindung ist und deren Ausgang mit einem Detektor in Fluidverbindung ist. Dieser Gaschromatograph kann zur differenzierten Analyse von Stoffen, die sowohl schwer- als auch leichtflüchtige Bestandteile enthalten, genutzt werden.

Eine weitere vorteilhafte Ausführungsform des erfindungsgemäßen Gaschromatographen ist für den Umschaltungsbetrieb fortgebildet und weist einen Injektor der zuvor beschriebenen Art für den Umschaltbetrieb auf und ist mit einer ersten Trennsäule, deren Eingang mit der fünften Öffnung in Fluidverbindung ist und deren Ausgang mit einem Detektor in Fluidverbindung ist, der mit der sechsten Öffnung in Fluidverbindung ist, und mit einer zweiten Trennsäule, deren Eingang mit der zweiten Auslassöffnung in Fluidverbindung ist und deren Ausgang mit einem Detektor in Fluidverbindung ist, der in Fluidverbindung mit der sechsten Öffnung ist, versehen. Dies ermöglicht wiederum, dass Stoffe analysiert werden, deren genaue Zusammensetzung nur durch Stoffauftrennung in zwei unterschiedlichen Trennsäulen ermittelt werden kann, beispielsweise weil sowohl schwer- als auch leichtflüchtige Bestandteile enthalten sind.

Dabei ist es bei den beiden vorgenannten Ausführungsformen des Gaschromatographen für die Back-Flush-Technik und die Umschaltungstechnik besonders vorteilhaft, wenn die erste Trennsäule eine gepackte Trennsäule zur Analyse leichtflüchtiger Bestandteile und die zweite Trennsäule eine Dünnschicht-Trennsäule zur Analyse schwerflüchtiger Bestandteile ist. Diese Trennsäulen können besonders vorteilhaft in Mikrosystemtechnik hergestellt werden und sind in Kombination mit dem erfindungsgemäßen Injektor gut einsetzbar, um einerseits eine gute Auflösung einer Vielzahl von Stoffbestandteilen zu erreichen und andererseits zu verhindern, dass die gepackte Trennsäule durch schwerflüchtige Bestandteile verunreinigt wird.

Ein weiterer Aspekt der Erfindung ist ein Verfahren zur Analyse chemischer Substanzen mit einem mikrosystemtechnischen Gaschromatographen, mit den Schritten: Zuführen einer ersten zu analysierenden Substanz zu einer ersten Probeneinlassöffnung eines mikrosystemtechnischen Injektors, Füllen einer ersten Speicherschleife des Injektors mit der ersten zu analysierenden Substanz in einer zweiten Injektorstellung, Umschalten des Injektors mittels eines Aktuators in eine erste Injektorstellung, Zuführen von Trägergas zu der ersten Speicherschleife, um die zu erst analysierende Substanz und das Trägergas einer zweiten Auslassöffnung und einer mit der zweiten Auslassöffnung in Fluidverbindung stehenden Trennsäule zuzuführen, Analysieren der getrennten Bestandteile hinter der Trennsäule mithilfe eines Detektors, bei dem wenigstens einer fünften Öffnung des Injektors ein Trägergas oder eine zu analysierende Substanz zugeführt wird.

Das Verfahren kann fortgebildet werden durch die Schritte: Zuführen einer zweiten zu analysierenden Substanz zu einer fünften Öffnung des Injektors in der ersten Injektorstellung, Füllen einer zweiten Speicherschleife des Injektors mit der zweiten zu analysierenden Substanz, und Zuführen von Trägergas zur zweiten Speicherschleife in der zweiten Injektorstellung, um die zweite zu analysierende Substanz und das Trägergas der zweiten Auslassöffnung und der mit der zweiten Auslassöffnung in Fluidverbindung stehenden Trennsäule zuzuführen, Analysieren der getrennten Bestandteile der zweiten zu analysierenden Substanz hinter der Trennsäule mithilfe des Detektors.

Dabei ist es besonders bevorzugt, wenn die zweite zu analysierende Substanz ein als Referenz dienendes Referenzgas ist.

Bei einer weiteren Fortbildung des erfindungsgemäßen Verfahrens wird die erste zu analysierende Substanz in einer ersten Strömungsrichtung einer gepackten Trennsäule zugeführt und dahinter mit einem ersten Detektor analysiert und es findet eine Fortbildung statt durch die Schritte: Umschalten des mikrosystemtechnischen Injektors mittels des Aktuators in die zweite Injektorstellung, wenn der erste Detektor alle leichtflüchtigen Bestandteile analysiert hat, Zuführen von Trägergas zur gepackten Trennsäule entgegen der ersten Strömungsrichtung, Leiten des aus der gepackten Trennsäule austretenden Gemisches von Trägergas und erster zu analysierender Substanz über den Injektor zu einer Dünnschicht-Trennsäule, und Analysieren der getrennten schwerflüchtigen Bestandteile der ersten zu analysierenden Substanz hinter der Dünnschicht-Trennsäule mithilfe eines zweiten Detektors.

Schließlich kann das Verfahren fortgebildet werden, indem die erste zu analysierende Substanz in der ersten Injektorstellung einer Dünnschichttrennsäule zugeführt wird und dahinter mit einem ersten Detektor analysiert wird und dann die Schritte: Umschalten des mikrosystemtechnischen Injektors mittels des Aktuators in die zweite Injektorstellung, wenn der erste Detektor den Durchgang der leichtflüchtigen Bestandteile der ersten zu analysierenden Substanz registriert hat, Weiterleiten der leichtflüchtigen Bestandteile der ersten zu analysierenden Substanz über den Injektor zu einer gepackten Trennsäule, weiteres Zuführen von Trägergas zur Dünnschicht-Trennsäule und zur gepackten Trennsäule in der zweiten Injektorstellung, Analysieren der getrennten schwerflüchtigen Bestandteile der ersten zu analysierenden Substanz hinter der Dünnschicht-Trennsäule mithilfe eines ersten Detektors, und Analysieren der getrennten leichtflüchtigen Bestandteile der ersten zu analysierenden Substanz hinter der gepackten Trennsäule mithilfe eines zweiten Detektors, ausgeführt werden.

Ein weiterer Aspekt der Erfindung ist ein Verfahren zum Herstellen einer gepackten Säule in Mikrosystemtechnik,
gekennzeichnet durch die Schritte:
- Ausbilden von meanderförmigen Grabenstrukturen in zwei Substraten,
- Ausbilden von zumindest einem Hilfsgraben, welcher sich von zumindest einer Meanderwindung zum Rand der Substrate erstreckt,
- Aufbringen des zweiten Substrats auf das erste Substrat, um hierdurch aus den Grabenstrukturen und dem zumindest einen Hilfsgraben eine Kanalstruktur und zumindest einen Hilfskanal zu machen,
- Zuführen des Packungsmaterials durch den zumindest einen Hilfskanal in die Kanalstruktur,
- Verschließen des zumindest einen Hilfskanals mit einem Klebstoff.

Dieses Verfahren ermöglicht eine besonders genaue und effiziente Fertigung von gepackten Säulen in mikrosystemtechnischer Bauweise.

Dabei ist es besonders bevorzugt, wenn in mehreren Meanderwindungen, vorzugsweise in jeder zweiten oder jeder, ein Hilfsgraben mündet. Hierdurch wird eine schnelle und vollständige Befüllung erzielt, insbesondere eine schnelle und vollständige Befüllung von einer Seite des Substrats, wenn jede zweite Meanderwindung einen Hilfsgraben aufweist.

Das Herstellungsverfahren für gepackte Säulen kann weiterhin fortgebildet werden, indem die Klebstoffmenge für jeden Hilfskanal so dosiert wird, dass sie eine bündig mit der Kanalstrukturwand fluchtende Fläche ausbildet. Hierdurch wird eine besonders vorteilhafte Kanalstruktur für präzise Analysen erzielt.

Bevorzugte Ausführungsformen der Erfindung werden anhand der anhängenden Figuren erläutert.

Es zeigen:
- Figur 1:: Einen Gaschromatographen in Mikrosystemtechnik nach dem Stand der Technik,
- Figur 2:: Eine schematische Ansicht einer ersten Ausführungsform des erfindungsgemäßen mikrosystemtechnischen Gaschromatographen,
- Figur 3:: Eine schematische Ansicht einer zweiten Ausführungsform des mikrosystemtechnischen Gaschromatographen, und
- Figur 4:: Eine schematische Ansicht einer dritten Ausführungsform des erfindungsgemäßen erfindungsgemäßen mikrosystemtechnischen Gaschromatographen.

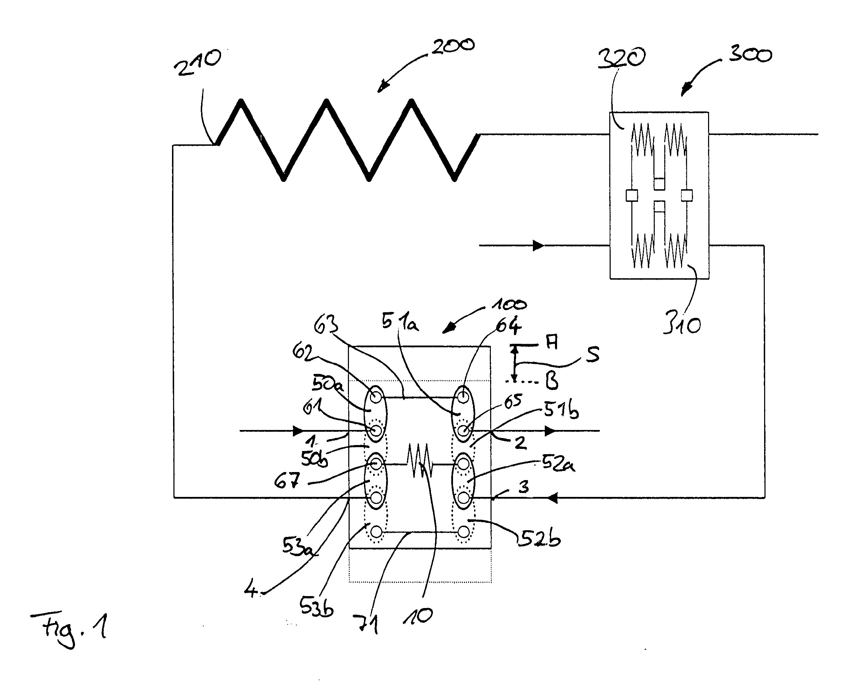

In Figur 1 ist ein miniaturisierter Gaschromatograph schematisch dargestellt, der einen Injektor 100, eine Dünnschichttrennsäule 200 und einen Wärmeleitfähigkeitsdetektor 300 umfasst.

Der mikrosystemtechnische Injektor 100 ist in zwei Injektorstellungen abgebildet: Mit durchgezogenen Linien ist eine erste Injektorstellung A gekennzeichnet, mit unterbrochenen Linien ist eine zweite Injektorstellung B gekennzeichnet. Das Umschalten zwischen den Injektorstellungen A,B erfolgt durch Verschieben eines Grabenblocks, der vier Gräben aufweist, um die Strecke S. Dementsprechend sind die Gräben in Figur 1 in einer ersten Injektorstellung als 50a-53a abgebildet (durchgezogene Linien) und in einer zweiten Injektorstellung B als Gräben 50b-53b (unterbrochene Linien).

Der Grabenblock liegt auf einem Leitungsblock auf, der eine Probeneinlassöffnung 1 aufweist, die in eine zum Grabenblock weisende Öffnung 61 mündet. Ein über die Probeneinlassöffnung 1 einströmendes Probenmaterial kann über den Graben 50a in der ersten Injektorstellung A in eine Öffnung 62 eintreten, wird dann über eine Leitung 63 im Leitungsblock zu einer Öffnung 64 transportiert und dann über den Graben 51a zu einer Öffnung 65 und schließlich zu einer Probenauslassöffnung 2 befördert.

In der zweiten Injektorstellung B wird das Probenmaterial bei Austreten aus der Öffnung 61 über den Graben 50b zu einer Öffnung 67 transportiert, die mit einer Probenspeicherschleife 10 im Leitungsblock verbunden ist. Die Probenspeicherschleife 10 wird mit Probenmaterial aufgeladen und das Probenmaterial kann über den Grabenblock 51 b wiederum zur Probenauslassöffnung 2 strömen.

Ein Helium-Trägergas durchströmt zunächst einen ersten Detektorabschnitt 310 des Detektors 300 und tritt dann bei einer Trägergaseinlassöffnung 3 in den Injektor ein. In der zweiten Injektorstellung B wird das Trägergas über den Graben 52b, die Leitung 71 und den Graben 53b zu einer Auslassöffnung 4 geleitet, die mit der Eingangsseite 210 der Trennsäule 200 verbunden ist.

In der ersten Injektorstellung wird das Trägergas über den Graben 52a in die Speicherschleife 10 eingeleitet und spült dadurch das Probenmaterial aus dieser Speicherschleife über den Graben 53a zum Ausgang 4 und folglich in die Trennsäule 200. Die definierte Probenmenge wird dann in der Trennsäule 200 getrennt und die getrennten Bestandteile in einem zweiten Detektorabschnitt 320 des Detektors 300 analysiert.

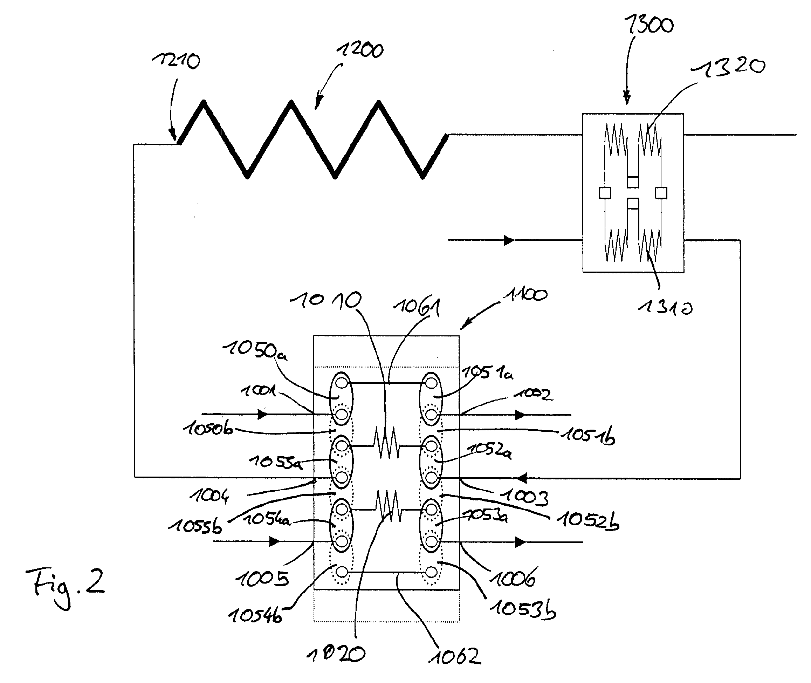

In Figur 2 ist ein erfindungsgemäßer Gaschromatograph mit einem erfindungsgemäßen Injektor 1100 für eine Doppelanalyse abgebildet. Der Injektor 1100 umfasst einen ersten Probeneinlass 1001 und einen zweiten Probeneinlass 1005. Der Injektor ist wiederum, wie in Figur 1, in zwei Injektorstellungen A,B dargestellt.

Der erste Probeneinlass 1001 ist in beiden Injektorstellungen mit einem ersten Probenauslass 1002 verbunden. Der zweite Probeneinlass 1005 ist in beiden Injektorstellungen mit einem zweiten Probenauslass 1006 verbunden.

In der in durchgezogenen Linien dargestellten ersten Injektorstellung A wird ein erstes Probenmaterial vom ersten Probeneingang 1001 über den Graben 1050a, eine Fluidleitung 1061 zum Graben 1051a geleitet und strömt von dort zum ersten Probenauslass 1002. Eine zweite, beim zweiten Probeneinlass 1005 einströmende Probe wird über den Grabenabschnitt 1054a in der ersten Injektorstellung A zu einer zweiten Probenspeicherschleife 1020 geführt und strömt von dort über den Grabenabschnitt 1053a zur zweiten Probenauslassöffnung 1006.

In der zweiten Injektorstellung B wird das erste Probenmaterial von der ersten Probeneinlassöffnung 1001 über den Grabenabschnitt 1050b zu einer ersten Probenspeicherschleife 1010 geleitet und strömt von dort über den Grabenabschnitt 1051 b zur ersten Probenauslassöffnung 1002. Die zweite Probe strömt von der zweiten Probeneinlassöffnung 1005 über den Grabenabschnitt 1054b, einen Leitungskanal 1062 zum Grabenabschnitt 1053b und tritt bei der zweiten Probenauslassöffnung 1006 aus dem Injektor aus.

Ein Trägergas durchströmt, wie zuvor bei Figur 1, zunächst einen ersten Detektorabschnitt 1310 eines Wärmeleitfähigkeitsdetektors 1300 und strömt dann bei einer Trägergaseinlassöffnung 1003 in den Injektor ein und wird in der zweiten Injektorstellung B über den Graben 1052b zur zweiten Probenspeicherschleife 1020 geleitet und führt das zweite Probenmaterial über den Graben 1055b zu einer Auslassöffnung 1004, die mit den Eingang 1210 einer Trennsäule 1200 verbunden ist. Auf diese Weise wird das zweite Probenmaterial durch die Trennsäule befördert, dort getrennt und anschließend in einem zweiten Detektorabschnitt 1320 analysiert.

Bei Umschalten des Injektors in die erste Injektorstellung A wird das Trägergas von der Öffnung 1003 über den Graben 1052a auf die erste Probenspeicherschleife 1010 zugeführt und fördert das dort gespeicherte erste Probenmaterial über den Grabenabschnitt 1055a zur Auslassöffnung 1004 und anschließend zur Analyse in die Trennsäule 1200 und den Detektor 1300.

Die Ausführungsform gemäß Figur 2 ermöglicht demnach die unmittelbar aufeinanderfolgende Analyse zweier Probenmaterialien durch Zwischenspeicherung in den zwei Probenspeicherschleifen 1010,1020 und zeitlich aufeinanderfolgende differenzierte und definierte Beförderung der Proben zur Trennsäule 1200 durch Umschalten zwischen den Injektorstellungen A und B.

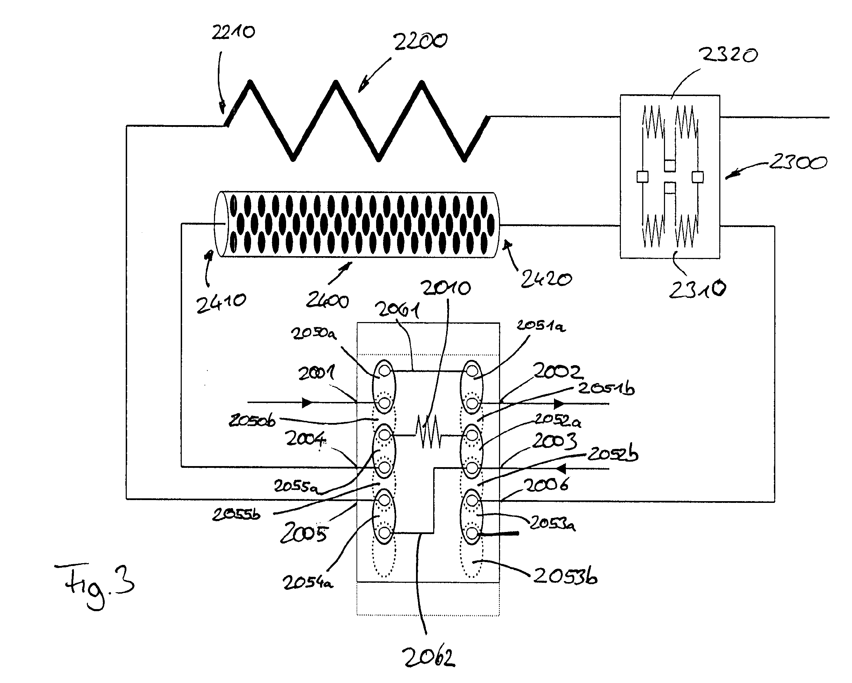

In Figur 3 ist eine zweite Ausführungsform des erfindungsgemäßen miniaturisierten Gaschromatographen mit erfindungsgemäßem Injektor dargestellt, der/die für eine Back-Flush-Schaltung ausgebildet ist.

Bei dieser Anordnung wird dem Injektor über eine Probeneinlassöffnung 2001 eine Probe zugeführt, die in beiden Injektorstellungen A,B zu einer Probenauslassöffnung 2002 geführt wird. In der durchgezogen dargestellten Injektorstellung A erfolgt dies über Gräbenabschnitte 2050a, 2051 a und eine Leitung 2061. In der Injektorstellung B erfolgt dies über Grabenabschnitte 2050b und 2051 b und eine Probenspeicherschleife 2010.

Über eine Trägergaseinlassöffnung 2003 wird dem Injektor ein Trägergas zugeführt, welches sich verzweigt und in Injektorstellung A einerseits über eine Leitung 2062 und einen Grabenabschnitt 2054a zu einem Auslass 2005 geleitet wird, der an die Eingangsseite 2210 einer Dünnschichttrennsäule 2200 angeschlossen ist. Andererseits strömt das Trägergas von der Einlassöffnung 2003 über einen Grabenabschnitt 2052a in die Probenspeicherschleife 2010 und befördert das dort in der Injektorstellung B abgelegte Probenmaterial in der Injektorstellung A über einen Grabenabschnitt 2055a zu einer Öffnung 2004 und von dort weiter zur Eingangsseite 2410 einer gepackten Trennsäule 2400.

Das Probenmaterial durchströmt die gepackte Trennsäule 2400 und wird in einem ersten Detektorabschnitt 2310 eines Wärmeleitfähigkeitsdetektors 2300 analysiert.

Sobald der Wärmeleitfähigkeitsdetektor 2300 die leichtflüchtigen Bestandteile des Probenmaterials analysiert hat, wird der Injektor in die Stellung B umgeschaltet. Hierdurch wird das Trägergasmaterial von der Trägergaseinlassöffnung 2003 über einen Grabenabschnitt 2052b zur Öffnung 2006 geleitet und strömt von dort durch den Wärmeleitfähigkeitsdetektor in die Ausgangsseite 2420 der gepackten Trennsäule 2400.

Die gepackte Trennsäule 2400 wird dadurch rückwärts ("Back-Flush") durchströmt und die schwerlöslichen Bestandteile der Probe aus der gepackten Trennsäule ausgewaschen und über die Öffnung 2004, einen Grabenabschnitt 2055b der Öffnung 2005 zugeführt, von wo die schwerflüchtigen Bestandteile zur Eingangsseite 2210 der Dünnschichttrennsäule 2200 geleitet werden. Hierdurch werden die schwerflüchtigen Bestandteile in der Dünnschichttrennsäule getrennt und anschließend in einem zweiten Detektorabschnitt 2320 des Wärmeleitfähigkeitsdetektors 2300 analysiert.

Die Injektorschaltung und der Gaschromatograph nach Figur 3 ermöglicht eine effiziente Analyse von Proben mit sowohl leicht- als auch schwerflüchtigen Bestandteilen mittels einer gepackten Trennsäule und einer Dünnschichttrennsäule, ohne dass die Gefahr bestünde, dass die gepackte Trennsäule durch die schwerflüchtigen Bestandteile kontaminiert und damit unbrauchbar würde.

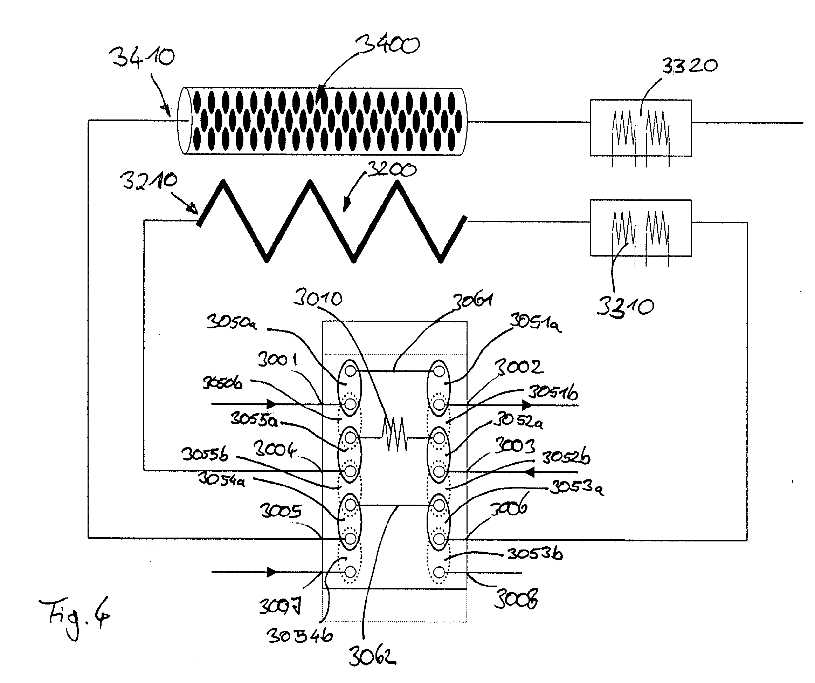

Figur 4 zeigt eine dritte Ausführungsform des erfindungsgemäßen Gaschromatographen und Injektors für einen Umschaltungsbetrieb.

Ebenso wie in Figur 1 verfügt der Injektor über eine Probeneinlassöffnung 3001, die in beiden Injektorstellungen A,B zu einer Probenauslassöffnung 3002 geleitet wird, wobei dies in der Injektorstellung A über einen Leitungskanal 3061 erfolgt und in Injektorstellung B über eine Probenspeicherschleife 3010 erfolgt.

Ein Trägergas wird über eine Öffnung 3003 zugeführt und durchströmt in Injektorstellung A über einen Grabenabschnitt 3052a, die Probenspeicherschleife 3010 und spült Probenmaterial, welches in der Probenspeicherschleife in der Injektorstellung B gespeichert wurde, über einen Grabenabschnitt 3055a zur Eingangsseite 3210 einer Dünnschichttrennsäule 3200. Nach Trennung in dieser Dünnschichttrennsäule wird die Probe in einem Detektor 3310 analysiert.

Die leichtflüchtigen Bestandteile können von der Dünnschichttrennsäule nicht getrennt werden und durchlaufen die Dünnschichttrennsäule und den Detektor 3310 als Paket und werden dem Injektor bei einer Öffnung 3006 zugeführt. Von dieser Öffnung 3006 werden die leichtflüchtigen Bestandteile in Injektorstellung A über eine Leitung 3062 zu einer Ausgangsöffnung 3005 geleitet und von dort zur Eingangsseite 3410 einer gepackten Trennsäule 3400 geführt, dort getrennt und anschließend in einem Detektor 3320 analysiert.

Um zu verhindern, dass auf diesem Weg der leichtflüchtigen Bestandteile von der Dünnschichttrennsäule zur gepackten Trennsäule auch schwerflüchtige Bestandteile zur gepackten Trennsäule gelangen, welche diese kontaminieren würden, wird nach einem definierten Zeitraum nach Durchlauf der leichtflüchtigen Bestandteile durch den Detektor 3310 der Injektor in die Injektorstellung B geschaltet.

Nach dem definierten Zeitraum haben die leichtflüchtigen Bestandteile bereits den Injektor passiert und hierauf folgend wird in Injektorstellung B über eine zweite Trägereinlassöffnung 3007 ein Trägergas zugeführt, welches über einen Grabenabschnitt 3054b zur Öffnung 3005 geleitet wird und von dort die leichtflüchtigen Bestandteile durch die gepackte Trennsäule zum Detektor 3320 befördert.

Das bei der Öffnung 3003 einströmende Trägergas wird in Injektorstellung B über die Leitung 3062 zum Auslass 3004 geleitet und befördert die schwerflüchtigen Bestandteile weiter durch die Dünnschichttrennsäule zum Wärmleitfähigkeitsdetektor 3310 und tritt nach Durchlauf durch den Wärmeleitfähigkeitsdetektor über einen Grabenabschnitt 3053b aus einer Öffnung 3008 des Injektors aus.

Auf diese Weise wird ebenfalls, wie bei der Back-Flush-Technik, erreicht, dass Proben mit sowohl leicht- als auch schwerflüchtigen Bestandteilen analysiert werden können, ohne dass die Gefahr besteht, dass die für die Analyse der leichtflüchtigen Bestandteile erforderliche gepackte Trennsäule durch schwerflüchtige Bestandteile kontaminiert wird.

## Patentansprüche

1. Mikrosystemtechnischer Injektor für einen Gaschromatographen, umfassend:
- einen ersten und zweiten Fluidleitungsblock,
- einen Aktuator zum Bewegen des ersten und zweiten Fluidleitungsblocks zwischen einer ersten und einer zweiten Injektorstellung,
- eine Probeneinlassöffnung (1001;2001;3001) zum Zuführen eines gasförmigen Probenmaterials,
- eine erste Auslassöffnung (1002;2002;3002) zum Ableiten des Probenmaterials in der ersten Injektorstellung,
- eine Trägergaseinlassöffnung (1003;2003;3003) zum Zuführen eines Trägergases,
- eine zweite Auslassöffnung (1004;2004;3004) zum Ableiten des Trägergases in der ersten Injektorstellung in eine an die zweite Auslassöffnung anschließbare erste Trennsäule,
- wobei die Probeneinlassöffnung in der zweiten Injektorstellung mit einem ersten Probenspeicher (1010;2010;3010) verbunden ist, um diesem das gasförmige Probenmaterial zuzuführen, und
- der erste Probenspeicher in der ersten Injektorstellung mit der zweiten Auslassöffnung verbunden ist, sodass das im ersten Probenspeicher gespeicherte Probenmaterial in der ersten Injektorstellung durch Spülung des ersten Probenspeichers mit Trägergas der zweiten Auslassöffnung zugeführt wird, mindestens eine fünfte Öffnung (1005;2005;3005) zum Zu- oder Abführen von Trägergas oder Probenmaterial in bzw. aus dem Injektor bereitgestellt ist.
**dadurch gekennzeichnet, dass**
- die fünfte Öffnung (2005) in der ersten Injektorstellung mit der Trägergaseinlassöffnung (2003) verbunden ist,
- eine sechste Öffnung (2006) in der zweiten Injektorstellung mit der Trägergaseinlassöffnung (2003) verbunden ist, um Trägergas von der Trägergaseinlassöffnung zur sechsten Öffnung zu leiten und hierdurch in der zweiten Injektorstellung einen im Kreislauf an die zweite Auslassöffnung und die sechste Öffnung angeschlossene erste Trennsäule (2400) rückwärts zu durchströmen, und
- in der zweiten Injektorstellung die fünfte Öffnung (2005) mit der zweiten Auslassöffnung (2004) verbunden ist, sodass in der zweiten Injektorstellung ein durch die zweite Auslassöffnung zugeführtes Gas der fünften Öffnung zugeführt wird und einer mit der fünften Öffnung verbundenen zweiten Trennsäule (2200) zugeführt werden kann.

2. Injektor nach einem der vorhergehenden Ansprüche,
**dadurch gekennzeichnet, dass** der erste Fluidleitungsblock in Silizium/Glastechnik hergestellt ist und alle Öffnungen am ersten Fluidleitungsblock angeordnet sind.

3. Injektor nach einem der vorhergehenden Ansprüche,
**dadurch gekennzeichnet, dass** der zweite Fluidleitungsblock aus einem reibungsarmen und chemisch inerten Material vorzugsweise mit geringen Ad- und Absorptionseigenschaften ausgebildet ist, insbesondere aus Polytetrafluorethylen (PTFE).

4. Injektor nach einem der vorhergehenden Ansprüche,
**dadurch gekennzeichnet, dass** in der zum ersten Fluidleitungsblock weisenden Fläche des zweiten Fluidleitungsblocks Grabenabschnitte (1050a,b-1055a,b; 2050a,b-2055a,b; 3050a,b-3055a,b) ausgebildet sind, welche in der ersten und zweiten Injektorstellung mit korrespondierenden Öffnungen in der zum zweiten Fluidleitungsblock weisenden Fläche des ersten Fluidleitungsblocks zusammenwirken, um die Verbindungen gemäß den Ansprüchen 1 bis 5 zu schalten.

5. Injektor nach einem der vorhergehenden Ansprüche,
**dadurch gekennzeichnet, dass** der zweite Fluidleitungsblock mit dem Aktuator verbunden ist.

6. Gaschromatograph mit zumindest einer Trennsäule (1200,2200,3200) zum Auftrennen eines Probenmaterials in seine atomaren und/oder molekülen Bestandteile und einem Detektor zum Erfassen dieser Bestandteile, **gekennzeichnet durch** einen Injektor nach einem der vorhergehenden Ansprüche.

7. Gaschromatograph nach Anspruch 6 zur Back-Flush-Analyse mit einem Injektor nach Anspruch 1 oder nach Anspruch 1 und einem der vorhergehenden Ansprüche 2 bis 6,
- mit einer ersten Trennsäule (2400), deren Eingang mit der zweiten Auslassöffnung (2004) in Fluidverbindung ist und deren Ausgang mit einem Detektor (2310) in Fluidverbindung ist, der mit der sechsten Öffnung (2006) in Fluidverbindung ist, und
- mit einer zweiten Trennsäule (2200), deren Eingang mit der fünften Öffnung (2005) in Fluidverbindung ist und deren Ausgang mit einem Detektor (2320) in Fluidverbindung ist.

8. Gaschromatograph nach Anspruch 7,
**dadurch gekennzeichnet, dass** die erste Trennsäule (3400) eine gepackte Trennsäule zur Analyse leichtflüchtiger Bestandteile und die zweite Trennsäule (3200) eine Dünnschicht-Trennsäule zur Analyse schwerflüchtiger Bestandteile ist.

9. Verfahren zu Analyse chemischer Substanzen mit einem mikrosystemtechnischen Gaschromatographen, mit den Schritten:
- Zuführen einer ersten zu analysierenden Substanz zu einer ersten Probeneinlassöffnung eines mikrosystemtechnischen Injektors,
- Füllen einer ersten Speicherschleife des Injektors mit der ersten zu analysierenden Substanz in einer zweiten Injektorstellung,
- Umschalten des Injektors mittels eines Aktuators in eine erste Injektorstellung
- Zuführen von Trägergas zu der ersten Speicherschleife, um die zu erst analysierende Substanz und das Trägergas einer zweiten Auslassöffnung und einer mit der zweiten Ablassöffnung in Fluidverbindung stehenden Trennsäule zuzuführen,
- Analysieren der getrennten Bestandteile hinter der Trennsäule mithilfe eines Detektors,
- Zuführen eines Trägergases oder einer zu analysierenden Substanz zu wenigstens einer fünften Öffnung des Injektors ein Trägergas oder eine zu analysierende Substanz zugeführt wird,
wobei die erste zu analysierende Substanz in einer ersten Strömungsrichtung einer gepackten Trennsäule (2400) zugeführt und dahinter mit einem ersten Detektor (2310) analysiert wird,
**gekennzeichnet durch** die Schritte:
- Umschalten des mikrosystemtechnischen Injektors mittels des Aktuators in die zweite Injektorstellung, wenn der erste Detektor (2310) alle leichtflüchtigen Bestandteile analysiert hat,
- Zuführen von Trägergas zur gepackten Trennsäule entgegen der ersten Strömungsrichtung,
- Leiten des aus der gepackten Trennsäule austretenden Gemisches von Trägergas und erster zu analysierender Substanz über den Injektor zu einer Dünnschicht-Trennsäule (2200), und
- Analysieren der getrennten schwerflüchtigen Bestandteile der ersten zu analysierenden Substanz hinter der Dünnschicht-Trennsäule mithilfe eines zweiten Detektors (2320).

10. Verfahren zu Analyse chemischer Substanzen mit einem mikrosystemtechnischen Gaschromatographen, mit den Schritten:
- Zuführen einer ersten zu analysierenden Substanz zu einer ersten Probeneinlassöffnung eines mikrosystemtechnischen Injektors,
- Füllen einer ersten Speicherschleife des Injektors mit der ersten zu analysierenden Substanz in einer zweiten Injektorstellung ,
- Umschalten des Injektors mittels eines Aktuators in eine erste Injektorstellung
- Zuführen von Trägergas zu der ersten Speicherschleife, um die zu erst analysierende Substanz und das Trägergas einer zweiten Auslassöffnung und einer mit der zweiten Ablassöffnung in Fluidverbindung stehenden Trennsäule zuzuführen,
- Analysieren der getrennten Bestandteile hinter der Trennsäule mithilfe eines Detektors,
- Zuführen eines Trägergases oder einer zu analysierenden Substanz zu wenigstens einer fünften Öffnung des Injektors
wobei die erste zu analysierende Substanz in der ersten Injektorstellung einer Dünnschicht-Trennsäule (3200) zugeführt und dahinter mit einem ersten Detektor (3310) analysiert wird,
**gekennzeichnet durch** die Schritte:
- Umschalten des mikrosystemtechnischen Injektors mittels des Aktuators in die zweite Injektorstellung, wenn der erste Detektor den Durchgang der leichtflüchtigen Bestandteile der ersten zu analysierenden Substanz registriert hat,
- Weiterleiten der leichtflüchtigen Bestandteile der ersten zu analysierenden Substanz über den Injektor zu einer gepackten Trennsäule (3400),
- weiteres Zuführen von Trägergas zur Dünnschicht-Trennsäule (3200) und zur gepackten Trennsäule (3400) in der zweiten Injektorstellung,
- Analysieren der getrennten schwerflüchtigen Bestandteile der ersten zu analysierenden Substanz hinter der Dünnschicht-Trennsäule mithilfe des ersten Detektors (3310), und
- Analysieren der getrennten leichtflüchtigen Bestandteile der ersten zu analysierenden Substanz hinter der gepackten Trennsäule mithilfe eines zweiten Detektors (3320).
